# EUROPEAN PATENT SPECIFICATION

(11) **EP 2 159 142 B1**
(45) Date of publication and mention of the grant of the patent: **03.06.2015**
(21) Application number: 09011018.0
(22) Date of filing: 27.08.2009
(51) Int. Cl.: B62J 23/00, B62J 25/00

(54) **Motorcycle**
Motorrad
Motocyclette

(30) Priority: 29.08.2008 JP 2008222386; 07.07.2009 JP 2009161097
(43) Date of publication of application: 03.03.2010
(73) Proprietor: Yamaha Hatsudoki Kabushiki Kaisha, Shizuoka-ken Shizuoka 438-8501 (JP)
(72) Inventor: Ohtsubo, Yasuyuki, Iwata-shi Shizuoka-ken 438-8501 (JP); Konno, Toshihiko, Iwata-shi Shizuoka-ken 438-8501 (JP); Saito, Yusuke, Iwata-shi Shizuoka-ken 438-8501 (JP); Shimizu, Masafumi, Iwata-shi Shizuoka-ken 438-8501 (JP); Ikeda, Kota, Iwata-shi Shizuoka-ken 438-8501 (JP); Yamada, Muneyuki, Iwata-shi Shizuoka-ken 438-8501 (JP)
(74) Representative: Zimmermann, Tankred Klaus

(56) References cited:
- JP-A- 2003 040 173
- JP-A- 2007 106 221
- JP-A- 2008 175 087
- US-A1- 2005 109 552

## Description

### FIELD OF THE INVENTION

The present invention relates to a motorcycle.

### BACKGROUND OF THE INVENTION

In the field of motorcycles including a unit swing-type engine unit, motorcycles of a sporty design are conventionally known (see JP 2005-343363 A). The engine mounted on the motorcycle described in JP 2005-343363 A is of an air-cooled type. In this motorcycle, at least a part of a bottom edge portion of a side cover which covers a bottom portion of a seat is formed to be inclined upward and rearward obliquely in the vehicle. In addition, as seen in a side view of the vehicle, a rear wheel is exposed. Owing to these, the motorcycle has a sporty appearance. A footrest for a tandem rider (hereinafter, referred to as the "tandem footrest") is provided at a position which is relatively close to a front end of the side cover and is outside the side cover in a width direction of the motorcycle.

JP 2008-101600 A discloses a motorcycle having a water-cooled type engine. In such a case, it is conceivable to adopt a system in which the radiator is provided outside the engine in a width direction of the motorcycle, namely, the so-called side radiator system (one example is described in JP 2008-101600 A).

JP 2008-175087 A describes a motorcycle according to the preamble of claim 1, having a water-cooled internal combustion engine and an air vent passage.

JP 2007-106221 A describes a motorcycle equipped with a power unit, a pillion step, a heel guard arranged inside from the pillion step and a mud guard constituted of a separate member of the heel guard. The mudguard is mounted on the power unit, arranged between the heel guard and a rear wheel and prevents the mud water, etc. scattered from the rotating rear wheel, splashed back by the power unit and wetting feet on the pillion step.

### SUMMARY OF THE INVENTION

It is an object of the present invention to provide an improved motorcycle including a side-radiator system and a footrest comfortable for the tandem rider while keeping the sporty appearance.

This object is achieved by a motorcycle according to claim 1.

The present invention provides a motorcycle including a footrest comfortable for a tandem rider while keeping the sporty appearance.

### BRIEF DESCRIPTION OF THE DRAWINGS

FIG. 1 is a side view of a motorcycle in embodiment 1 not being part of the invention;
FIG. 2 is a cross-sectional view of a radiator and the vicinity thereof in embodiment 1;
FIG. 3 is a plan view of the radiator and the vicinity thereof in Embodiment 1, in which a tandem footrest and a seat frame located above the radiator are partially shown with the two-dot chain line;
FIG. 4 is a rear view of the radiator and the vicinity thereof, the tandem footrest and the seat frame in embodiment 1, in which a portion of the seat frame which is connected to the tandem footrest is shown by a cross-section;
FIG. 5 is a side view of the tandem footrest in embodiment 1;
FIG. 6 is a cross-sectional view of FIG. 5 taken along line VI-VI;
FIG. 7 is a cross-sectional view of FIG. 5 taken along line Y-Y;
FIG. 8 is a side view of a tandem footrest in embodiment 2 not being part of the invention;
FIG. 9 is a cross-sectional view of FIG. 8 taken along line Z-Z;
FIG. 10 is a side view of a tandem footrest in embodiment 3 not being part of the invention;
FIG. 11 is a side view of a rear portion of a motorcycle in embodiment 4;
FIG. 12 is a cross-sectional view of FIG. 11 taken along line XII-XII;
FIG. 13 shows a tandem footrest in embodiment 4;
FIG. 13A is a perspective view as seen from the inside in a width direction of the motorcycle , and FIG. 13B is a perspective view as seen from the outside in a width direction of the motorcycle ;
FIG. 14 is a side view of the tandem footrest in embodiment 4 as seen from the outside in a width direction of the motorcycle ;
FIG. 15 is a side view of the tandem footrest in embodiment 4 as seen from the inside in a width direction of the motorcycle ; and
FIG. 16 is a side of a radiator and the vicinity thereof in embodiment 4, as seen from the inside in a width direction of the motorcycle.

### DETAILED DESCRIPTION OF THE PREFERRED EMBODIMENTS

### <Embodiment 1 not being part of the invention >

In the following description, the directions of "front", "rear", "up", "down", "left", "right" and the like refer to the respective directions as seen from a rider sitting on a seat 8, unless otherwise specified. Therefore, the expression "in a width direction of the motorcycle " refers to a direction extending in the direction of a width, i.e., leftward or rightward, with respect to the motorcycle 1, and can be rephrased as "left/right direction".

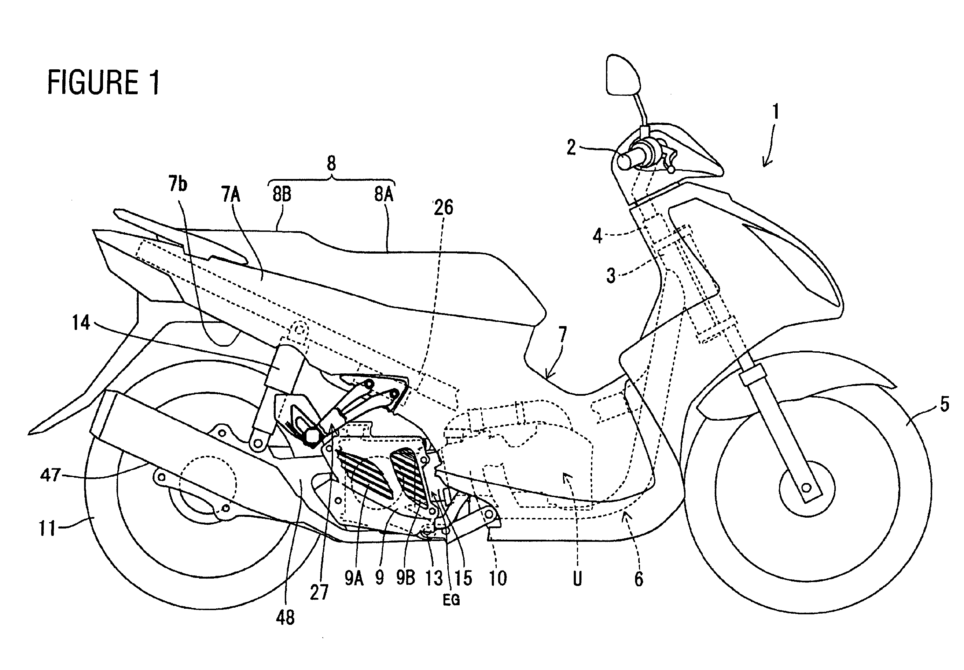

FIG. 1 shows a motorcycle 1 according to this embodiment. In a front portion of the motorcycle 1, a handle 2 is provided. The handle 2 is coupled to a front wheel 5 via a steering shaft 4. The steering shaft 4 is inserted into a head pipe 3. To the head pipe 3, a body frame 6 is coupled. The body frame 6 is covered with a body cover 7. The body frame 6 supports the seat 8. A front portion of the seat 8 is a driver's seat 8A on which a driver is to sit, and a rear portion of the seat 8 is a tandem seat 8B on which a tandem rider is to sit. The tandem seat 8B is one step higher than the driver's seat 8A. Portions of the body cover 7 which cover side portions of the vehicle are each a side cover 7A. A bottom edge 7b of the side cover 7A extends rearward and upward obliquely.

The body frame 6 extends in the front/rear direction. The body frame 6 includes a seat frame 26 for supporting the seat 8. The seat frame 26 is located below the seat 8 as seen in a side view and extends rearward and upward obliquely. The bottom edge 7b of the side cover 7A is located below the seat frame 26, and extends rearward and upward. Thus, in the motorcycle 1 according to this embodiment, as seen in the side view of the vehicle, a radiator cover 9 and the rear wheel 11 are entirely exposed.

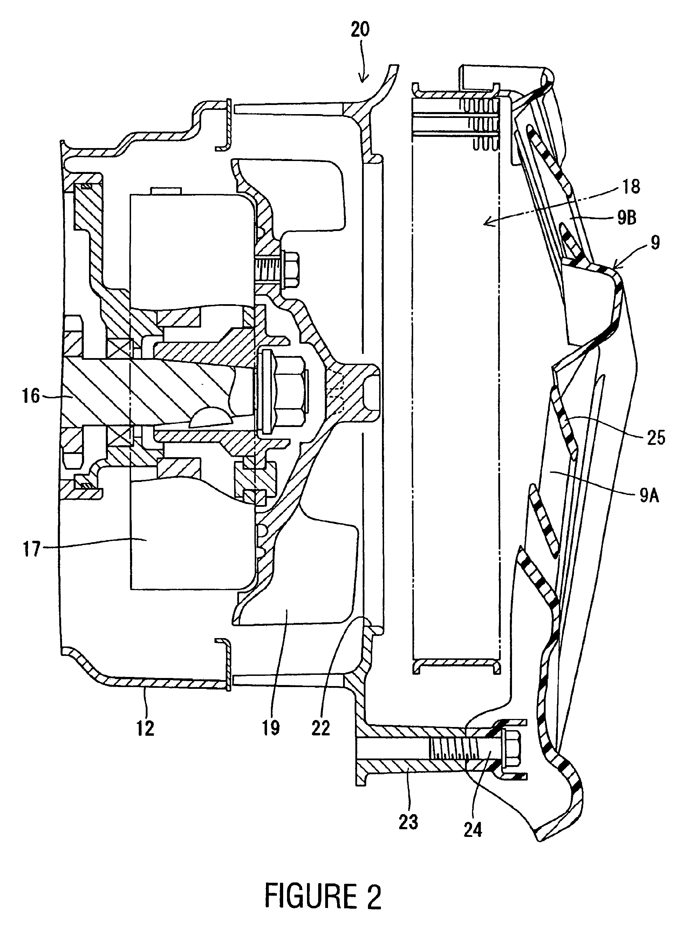

An engine unit U is attached to the body frame 6.. The engine unit U includes an engine EG having a cylinder head 10, a cylinder block 15 and a crank case 12 (see FIG. 2), and also includes an automatic transmission not shown. The engine unit U is supported by the body frame 6 to be pivotable around a pivot shaft 13. Rearward to the engine unit U, the rear wheel 11 is coupled. To the right (the side closer to the viewer of FIG. 1) of the engine unit U, a rear arm 4 8 is provided. Rearward to the engine unit U, bottom ends of rear shock absorbers 14 are pivotably coupled. A pair of left and right rear shock absorbers 14 are provided. The bottom end of the right rear shock absorber 14 is pivotably coupled to the rear arm 48. Top ends of the left and right rear shock absorbers 14 are pivotably coupled to the body frame 6. Owing to such a structure, the engine unit U is of a unit swing-type swingable together with the rear wheel 11 around the pivot shaft 13.

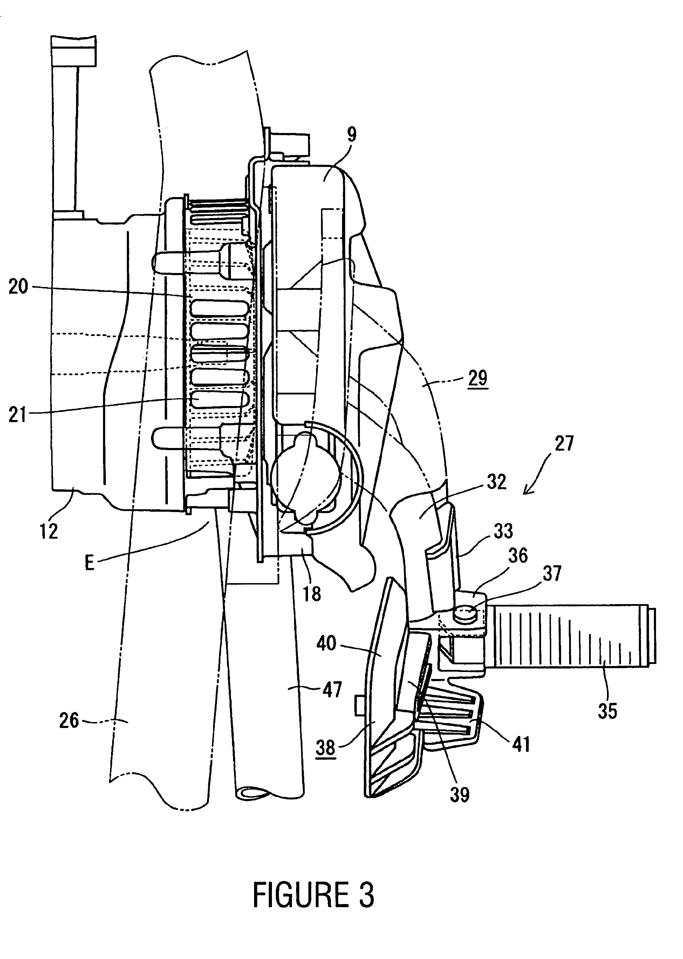

The engine EG according to this embodiment is a water-cooled type, four-cycle single-cylinder engine, and is located in the state where a cylinder shaft is directed substantially horizontally. In the engine EG according to this embodiment, the crank case 12, the cylinder block 15, and the cylinder head 10 are coupled in this order from rear to front (see FIG. 1 or FIG. 2). Inside the crank case 12, a crank shaft 16 is accommodated (see FIG. 3). The crank shaft 16 is supported by the crank case 12, and is rotatable around an axis thereof. The crank shaft 16 extends in the left/right direction inside the crank case 12.

To the cylinder head 10 of the engine EG, one end of an exhaust pipe 47 is connected. The exhaust pipe 47 passes below a radiator 18 and a fan case 20 described later, and extends rearward in the vehicle.

To the left of the crank shaft 16, the automatic transmission (not shown) for driving the rear wheel 11 is located. The automatic transmission is, for example, a belt-type continuously variable transmission having a V belt. To the right of the crank shaft 16, a flywheel magnet 17 and a radiator fan 19 for power generation are located along an axial direction of the crank shaft 16. To the right of the radiator fan 19, the radiator 18 is located. The radiator fan 19 guides air from the right to the left of the radiator 18. An outer side surface of the radiator 18 is entirely covered with the radiator cover 9.

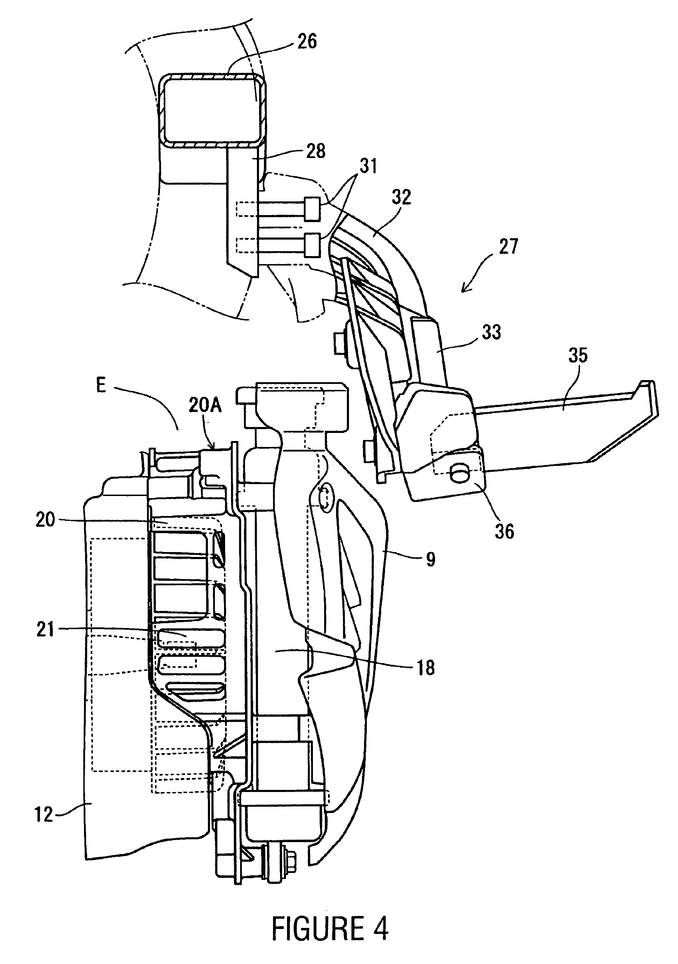

The radiator fan 19 is attached to a right end portion of the crank shaft 16. Therefore, the radiator fan 19 rotates in association with the crank shaft 16. As the radiator fan 19 according to this embodiment, a centrifugal fan is used, but there is no specific limitation on the type of the radiator fan 19. By the rotation of the radiator fan 19, the air outside the radiator cover 9 passes the radiator 18 to the radiator fan 19 and then turns to a centrifugal direction of the radiator fan 19. The air which has turned to the centrifugal direction of the radiator fan 19 is released outside the fan case 20 as exhaust air from a plurality of exhaust air openings 21 of the fan case 20 (see FIG. 3 or FIG. 4).

The fan case 20 is formed of, for example, aluminum die-cast, and accommodates the radiator fan 19 inside. Into the fan case 20 and a right surface of the crank case 12, a bolt (not shown) is screwed, so that the fan case 20 is supported by the crank case 12. As shown in FIG. 2, a right surface of the fan case 20 has a ventilation opening 22 for guiding air from the radiator 18 to the radiator fan 19. A diameter of the ventilation opening 22 is substantially the same as an outer diameter of the radiator fan 19. The center of the ventilation opening 22 and the rotation center of the radiator fan 19 are set at substantially the same position as seen in the side view of the vehicle. The fan case 20 includes a cylindrical section 20A (see FIG. 4) extending in the axial direction of the crank shaft 16. The cylindrical section 20A is located at a position overlapping the radiator fan 19 in the front/rear direction. The cylindrical section 20A is formed to be cylindrical. An inner diameter of the cylindrical section 20A is larger than the diameter of the ventilation opening 22. In an outer circumferential surface of the cylindrical section 20A, the plurality of exhaust air openings 21 are formed. The exhaust air openings 21 each have a rectangular shape which is longer in the direction in which the cylindrical section 20A extends than in the circumferential direction of the cylindrical section 20A. Owing to these plurality of exhaust air openings 21 formed in the outer circumferential surface of the cylindrical section 20A, an area in the vicinity of the fan case 20 acts as an area E to which the exhaust air which has passed the radiator 18 is guided. The motorcycle 1 according to this embodiment has a structure in which the bottom edge 7b of the side cover 7A is inclined rearward and upward obliquely as seen in the side view and the radiator cover 9 and the rear wheel 11 are entirely exposed as seen in the side view of the vehicle (see FIG. 1). Owing to such a structure, a space in the area E which is above and rearward to the fan case 20 is open to the sides of the vehicle. Therefore, especially in the space above and rearward to the fan case 20, the exhaust air which has passed the radiator 18 easily flows out directly outside the vehicle without being blocked by the body cover 7.

The radiator 18 is attached to the right surface of the fan case 20 by a bolt (not shown).

The radiator cover 9 is integrally formed of a synthetic resin. The radiator cover 9 is attached to the right surface of the fan case 20 by fixing bolts 24 tightened at a plurality of bosses 23 (only one is shown in FIG. 2) provided in the right surface of the fan case 20. As shown in FIG. 1, the radiator cover 9 has front and rear cooling air intake openings 9A and 9B. As shown in FIG. 2, in each of the intake openings 9A and 9B, a plurality of air guide plates 25 extending in the front/rear direction are located. Each of the intake openings 9A and 9B can take in the wind, blowing against the vehicle while the motorcycle 1 is running, to the left of the radiator cover 9. In other words, each of the intake openings 9A and 9B can take in the wind to a space between the radiator cover 9 and the radiator 18. The wind taken to the left of the radiator cover 9 passes a core portion of the radiator 18.

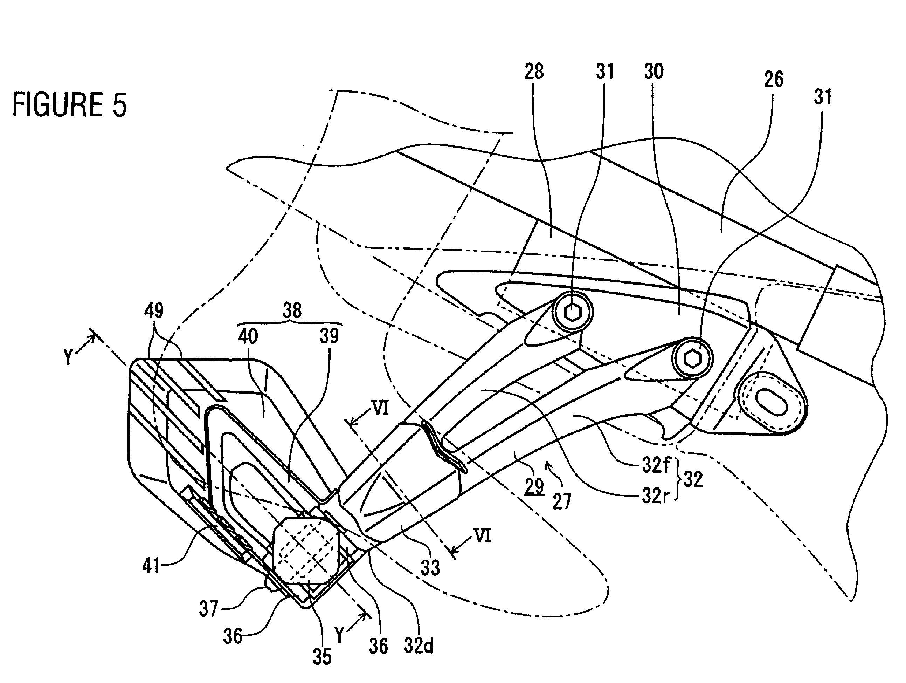

A bracket 28 is provided on a portion of the seat frame 26 which is above the fan case 20 (see FIG 5). The bracket 28 extends downward from the seat frame 26. To the bracket 28, a tandem footrest 27 is fixed. As shown in FIG. 5, the tandem footrest 27 includes a metal main body 29. In this embodiment, the main body 29 of the tandem footrest 27 is formed of aluminum. The main body 29 includes a support section 30, a footrest section 35, holding sections 36, a leg section 32, and a base section 39. The support section 30 is attached to the body frame 6 via the bracket 28. The footrest section 35 supports the leg of the tandem rider from below. The holding sections 36 hold the footrest section 35 such that the footrest section 35 is foldable. The leg section 32 is located between the holding sections 36 and the support section 30, and connects the holding sections 36 and the support section 30 to each other. The base section 39 is connected to the holding sections 36. When the leg of the tandem rider is on the footrest section 35, the heel of the tandem rider contacts the base section 39 (see FIG. 5).

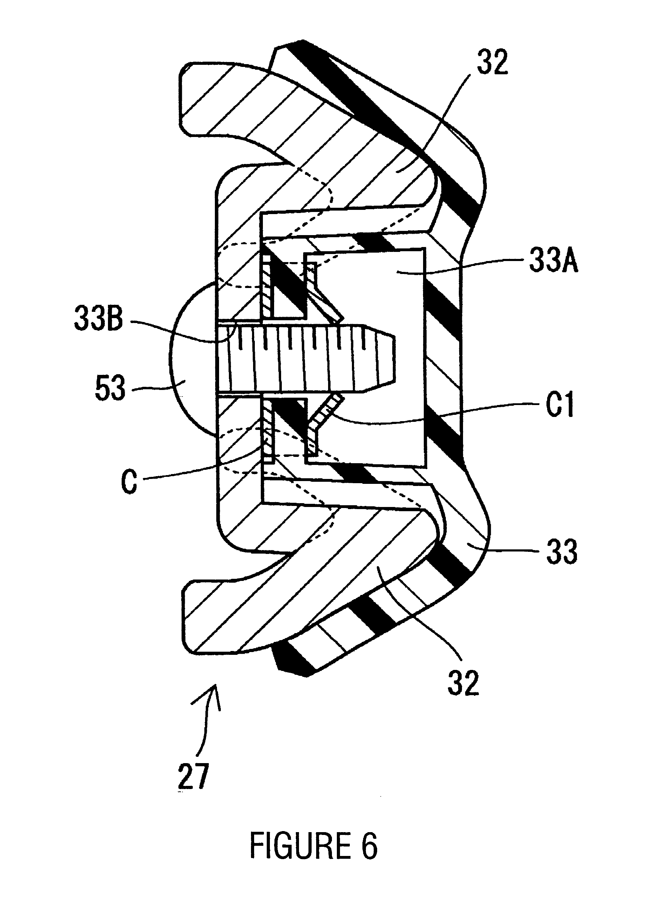

The support section 30 is formed above the main body 29. The leg section 32 is screwed to the bracket 28 via the support section 30. As seen in the side view, the support section 30 is formed to have a generally triangular shape, in which the size in the up/down direction thereof is gradually decreased from a front portion toward a rear portion. The support section 30 is tightened to the bracket 28 by a plurality of bolts 31. In this embodiment, the support section 30 is tightened and fixed to the bracket 28 by the bolts at two positions, i.e., one front position and one rear position. From the support section 30, the leg section 32 extends rearward and downward. The leg section 32 includes a front leg section 32f and a rear leg section 32r which are branched from each other, and the front leg section 32f and the rear leg section 32r extend rearward and downward from the support section 30. The front leg section 32f and the rear leg section 32r become gradually closer to each other as approaching a rear end of the leg section 32, and are connected to a bottom leg section 32d (see FIGS. 4 and 5). A right surface of the bottom leg section 32d of the leg section 32 in the left/right direction is covered with a non-metal heat-insulating cover 33 (see FIG. 6). The heat-insulating cover 33 is formed of, for example, a soft resin. The heat-insulating cover 33 has a hollow chamber 33A inside. A slit 33B is provided inward to the hollow chamber 33A in a width direction of the motorcycle (left in FIG. 6; in other words, bottom surface side of the hollow chamber 33A), and an edge of the slit 33B is provided with a clip nut C folded into a generally U shape. The clip nut C is formed of a metal plate. The clip nut C has a screw hole C1. The heat-insulating cover 33 is fixed to the leg section 32 by a screw 53 inserted into the screw hole C1 from a inner side of the leg section 32 in a width direction of the motorcycle (left in FIG. 6; in other words, reverse side of the leg section 32).

As shown in FIG. 5, the holding sections 36 are connected to a bottom end portion of the leg section 32. The holding sections 36 project outward in a width direction of the motorcycle from the bottom end portion of the leg section 32. The holding sections 36 in this embodiment are a pair of top and bottom holding sections 36. The top and bottom holding sections 36 are distanced fromeach other in the up/down direction while holding one end of the footrest section 35 there between. The top and bottom holding sections 36 have a hinge pin 37 inserted there through. The footrest section 35 is pivotably attached to the holding sections 36 by the hinge pin 37. The footrest section 35 is rod-shaped, and is pivotable between a use position at which the footrest section 35 projects outward in a width direction of the motorcycle. A storage position at which the footrest section 35 is located along the base section 39.

As shown in FIG. 1, the footrest section 35 at the use position is slightly rearward to a rear end of the radiator cover 9 in the front/rear direction and at substantially the same position or slightly below a top edge of the radiator cover in the up/down direction. Namely, the footrest section 35 is located rearward to the radiator 18 in the front/rear direction. As shown in FIG. 3 and FIG. 4, the footrest section 35 at the use position is outside of the radiator cover 9 in the left/right direction.

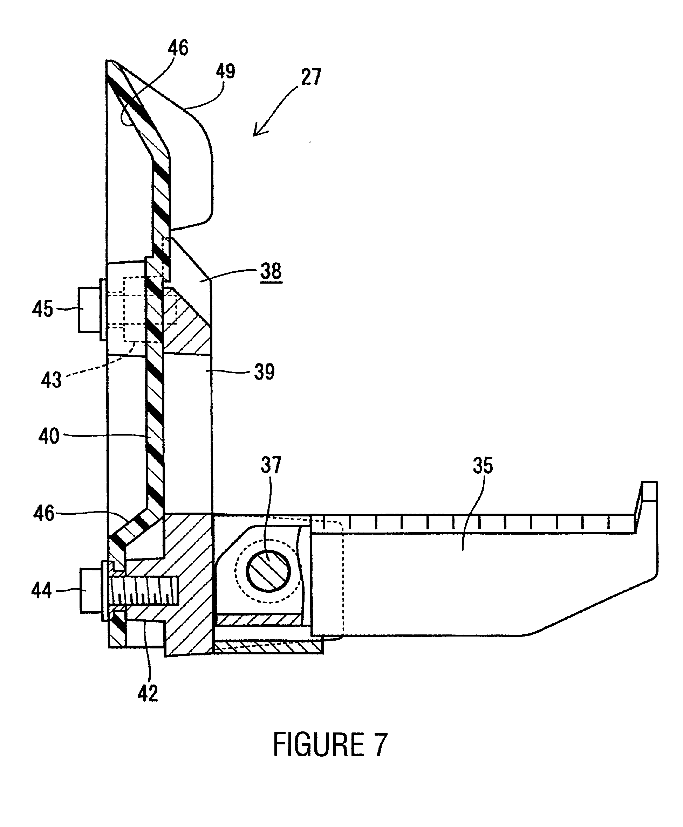

As shown in FIG. 5, a projection section 38 extends rearward and upward obliquely from a bottom end portion of the leg section 32. The projection section 38 includes a base section 39 acting as a part of the main body 29 and a non-metal shielding member 40. In this embodiment, the shielding member 40 is formed of a resin material. The base section 39 has an opening at a center. Namely, the base section 39 is hollow at the center. As seen in the side view, a rear end portion of the base section 39 in the front/rear direction has a pointed top edge. A restriction plate 41 is formed in a bottom edge portion of the base 39 rearward to the footrest section 35. The restriction plate 41 is formed integrally with the base section 39, and projects outward in a width direction of the motorcycle. Thus, the restriction plate 41 restricts a rear portion of the leg of the tandem rider from moving inward in a width direction of the motorcycle over the projection section 38. As shown in FIG. 7, on a left surface of the base section 39 in the left/right direction, bolt fixing sections 42 and 43 are integrally formed with the base section 39. In other words, the bolt fixing sections 42 and 43 are integrally formed with the base section 39 on an inner surface of the base section 39 in a width direction of the motorcycle. The bolt fixing section 42 is formed in the vicinity of the footrest section 35. The bolt fixing section 43 is formed away from the footrest section 35.

As shown in FIG. 7, the shielding member 40 is attached to the inner surface of the base section 39. To the base section 39 and the shielding member 40, bolts 44 and 45 are tightened respectively into the bolt fixing sections 42 and 43. As shown in FIG. 5, the shielding member 40 has a size sufficient to cover the entirety of the inner surface of the base section 39. The shielding member 40 also has a size sufficient to project outward from an outer circumferential edge of the base section 39. The shielding member 40 projects upward from the entirety of a top edge portion of the base section 39 in the up/down direction, downward from the bottom edge portion of the base section 39 in the up/down direction, and rearward from the rear end portion of the base section 39 in the front/rear direction. The shielding member 40 projects from the bottom edge portion of the base 39 by a smaller length than from the top edge portion and from the rear end portion of the base section 39. In this embodiment, a rear end portion of the shielding member 40 is V-shaped.

As shown in FIG. 5 and FIG. 7, the shielding member 40 has a plurality of fins 49. The fins 49 are slit-like and extend rearward and upward obliquely. The slit-like fins 49 extend substantially parallel to the direction in which the base section 39 extends, namely, the direction in which the shielding member 40 extends. There is no specific limitation on the direction in which the fins 49 extend. The fins 49 provided in the shielding member 40 improves the heat releasing performance of the shielding member 40. As shown in FIG. 7, each fin 49 extends to a position substantially the same as a right end of the base section 39 in the left/right direction.

As shown in FIG. 7, the shielding member 40 has an inclining face 46 along an outer circumferential edge thereof except for a longitudinal-direction end portion thereof on the side of the footrest section 35. The inclining face 46 is bent inward in a width direction of the motorcycle. Owing to this, when the exhaust air hits the inner surface of the shielding member 40, the exhaust air can be prevented from bypassing, and going outside, the projection section 38.

In the motorcycle 1, when the crank shaft 16 is rotated while the engine EG is driven, the radiator fan 19 is rotated along with the rotation of as the crank shaft 16. Owing to this, outside air which has been taken inside through the intake openings 9A and 9B of the radiator cover 9 passes the core portion of the radiator 18 and then passes the ventilation opening 22 to enter the inside of the fan case 20. Then, the air which has entered the inside of the fan case 20 is released outside the fan case 20 as exhaust air from the exhaust air openings 21. In the motorcycle 1, the radiator cover 9 and the rear wheel 11 are entirely exposed as seen in the side view of the vehicle. Therefore, the exhaust air released outside the fan case 20 while the motorcycle 1 is running immediately flows rearward in the vehicle by the wind blowing against the vehicle. Accordingly, in the motorcycle 1 according to this embodiment, the influence of the exhaust air on the feet of the tandem rider is considered to be small.

When the motorcycle 1 is not running but is idling, the radiator fan 19 is associated with the rotation of the crank shaft 16. Therefore, while the engine EG is driven, the radiator fan 19 is constantly rotated. Owing to this, even when the motorcycle 1 is at a stop, while the engine EG is driven, the exhaust air is released from the exhaust air openings 21. However, because the motorcycle 1 is not running, no wind blows against the motorcycle 1. Therefore, when the motorcycle 1 is at a stop, air heated by the radiator 18 is likely to stay in the area E outside of, and in the vicinity of, the fan case 20. In the motorcycle 1 according to this embodiment, as described above, the bottom edge 7b of the side cover 7A extends rearward and upward, and the radiator cover 9 and the rear wheel 11 are entirely exposed as seen in the side view of the vehicle. Therefore, the exhaust air is likely to flow outward in a width direction of the motorcycle from the area E. In addition, as shown in FIG. 5, the tandem footrest 27 includes the shielding member 40. Owing to this, while the motorcycle 1 is running, the projection section 38 including the shielding member 40 can suppress the air heated by the radiator 18 from flowing to the foot of the tandem rider.

In the motorcycle 1 according to this embodiment, the tandem footrest 27 is located outside of the radiator cover 9 in a width direction of the motorcycle , and is located rearward to the radiator 18 in the front/rear direction (see FIG. 1 and FIG. 4). The tandem footrest 27, which is located rearward to the radiator 18, does not overlap the radiator 18 as seen in the side view. As shown in FIG. 1, the intake openings 9A and 9B of the radiator cover 9 do not overlap the footrest section 35 as seen in the side view. Therefore, the air flowing from the outside of the radiator cover 9 toward the radiator fan 19 (see FIG. 2) is not blocked by the footrest section 35. Namely, in the case where, as in this embodiment, the tandem footrest 27 is located rearward to the radiator 18, the air to be introduced into the radiator 18 smoothly flows from the outside of the radiator 18 toward the radiator 18. Owing to this, the cooling performance of the radiator 18 is not negatively affected. An undesired rise of the temperature of the radiator 18 is prevented.

In the case where, as in this embodiment, the footrest section 35 is located below the bottom edge 7b of the side cover 7A as seen in the side view of the vehicle, namely, at a position relatively close to the fan case 20, it is concerned that the exhaust air may influence the foot of the tandem rider. However, the motorcycle 1 in this embodiment includes the tandem footrest 27 including the projection section 38. Owing to this, the flow of the exhaust air toward the foot of the tandem rider is blocked by the projection section 38 or the heat-insulating cover 33. Therefore, any discomfort felt by the tandem rider due to the exhaust air can be prevented. Thus, the tandem footrest 27 according to this embodiment can suppress the influence of the air around the radiator 18.

In a part of an outer surface of the tandem footrest 27, the resin heat-insulating cover 33 covers the metal main body 29 partially, namely, portions of the main body 29 which need to be covered. Owing to this, the leg of the tandem rider does not directly contact the main body 29 of the tandem footrest 27. Therefore, according to this embodiment, the motorcycle 1 is comfortable to the tandem rider. In addition, the member(s) for blocking the exhaust air is integrally provided to the tandem footrest. For this reason, the number of the elements of the motorcycle 1 is not increased, and the motorcycle 1 is easy to handle and easy to assemble.

The motorcycle 1 in this embodiment has a water-cooled type engine and includes the radiator 18 and the radiator fan 19 side by side in the left/right direction. Therefore, as compared to a motorcycle having an air-cooled type engine, the distance in a width direction of the motorcycle between the radiator 18 and the footrest 35 is shorter. This places the leg of the tandem rider close to the radiator 18. Heat of the exhaust air from the fan case 20 may undesirably affect influence the tandem rider. The influence of the heat of the exhaust air from the fan case 20 can be reduced by moving the footrest section 35 in the left/right direction, the front/rear direction or the like to distance the footrest section 35 and the radiator 18 from each other. The position of the footrest section 35 needs to be determined based on the structure of the motorcycle 1 and a demand from the tandem rider. If a particular area (i.e., the vicinity of the area E) is excluded from the area where the footrest 35 can be located of avoiding the influence of the exhaust air from the fan case 20 on the tandem rider, the footrest section 35 is required to be located away from that particular area. This may spoil the riding comfort of the tandem rider. By contrast, in this embodiment, the degree of freedom for the position of the footrest section 35 is increased. Therefore, any discomfort which may be felt by the tandem rider can be prevented without decreasing the riding comfort of the tandem rider. Thus, the motorcycle is comfortable to the tandem rider.

In addition, the tandem footrest 27 in this embodiment includes the leg section 32. By appropriately selecting the length and extending direction of the leg section 32, the footrest section 35 can be located at a more suitable position for the tandem rider. According to this embodiment, by forming the leg section 32 with an appropriate structure, the tandem footrest 27 more comfortable to the tandem rider can be realized.

### <Embodiment 2 not being part of the invention >

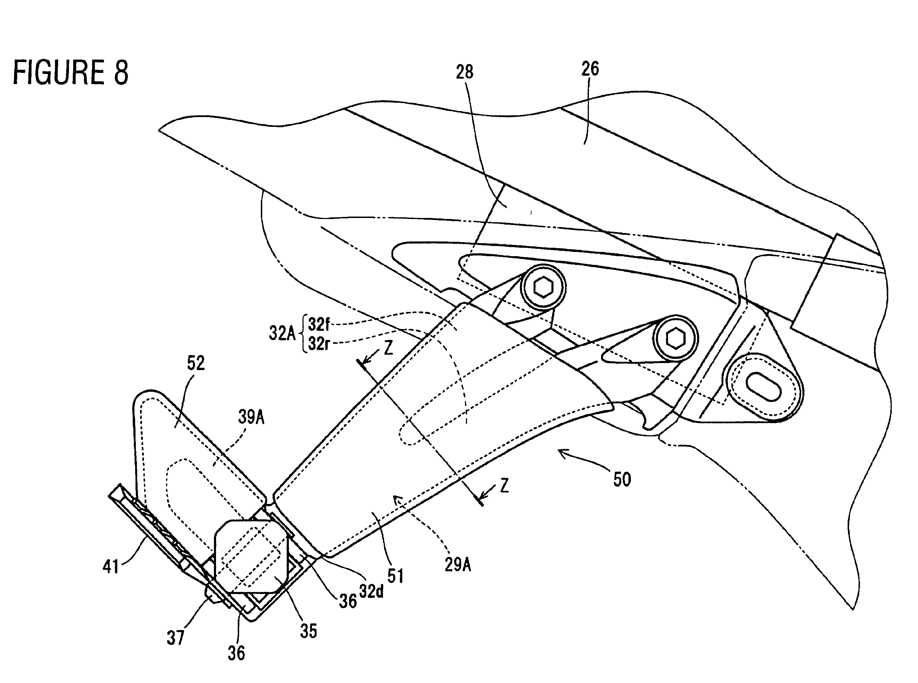

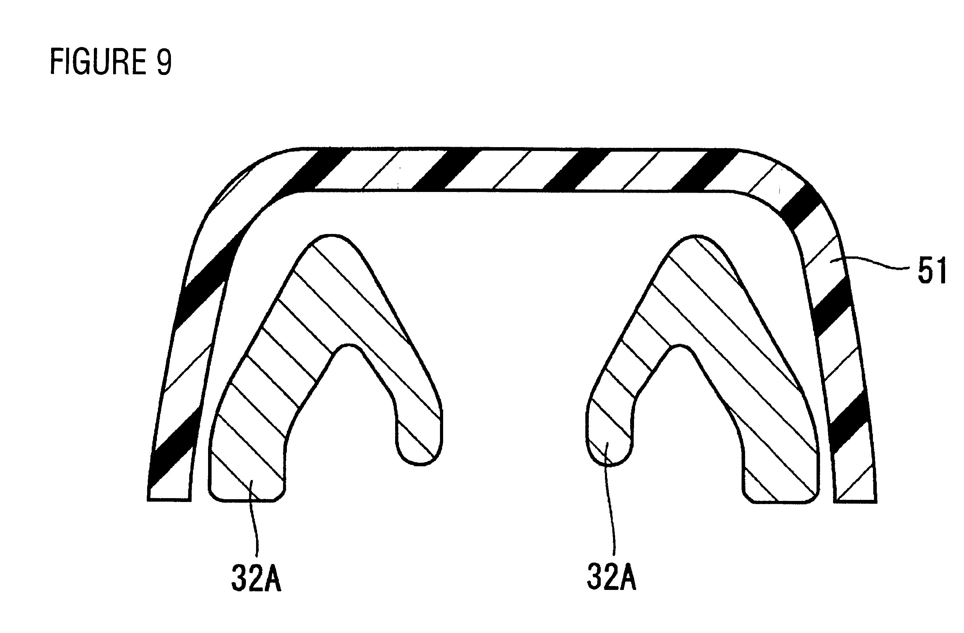

Now, embodiment 2 will be described with reference to FIG 8 and FIG 9. Regarding a tandem footrest 50 according to this embodiment, a main body 29A is the same as the main body in embodiment 1. In embodiment 1, the leg section 32 and the base section 39 are partially covered with resin members (the heat-insulating cover 33 and the shielding member 40). In this embodiment, the tandem footrest 50 includes a first cover 51 and a second cover 52. The first cover 51 and the second cover 52 are formed of a non-metal material; specifically, a resin material. The first cover 51 covers an outer surface of a leg section 32A substantially entirely. The second cover 52 covers an outer surface of a base section 39A substantially entirely. As shown in FIG. 9, the first cover 51 covers the entirety of both side surfaces of the leg section 32A in a width direction of the motorcycle , and also covers the substantially entire length of the leg section 32A in a longitudinal direction thereof. The second cover 52 covers the base section 39A in the same manner. The first cover 51 is fixed to the leg section 32A by a screw inserted thereto from an inner surface of the leg section 32A. The second cover 52 is fixed to the base section 39A by a screw inserted thereto from an inner surface of base section 39A.

In embodiment 2 with the above-described structure also, the foot of the tandem rider is shielded against the heat. Since the main body 29A is effectively covered with the first cover 51 and the second cover 52, the foot of the tandem rider is suppressed from contacting the metal portion of the tandem footrest 50.

### <Embodiment 3 not being part of the invention >

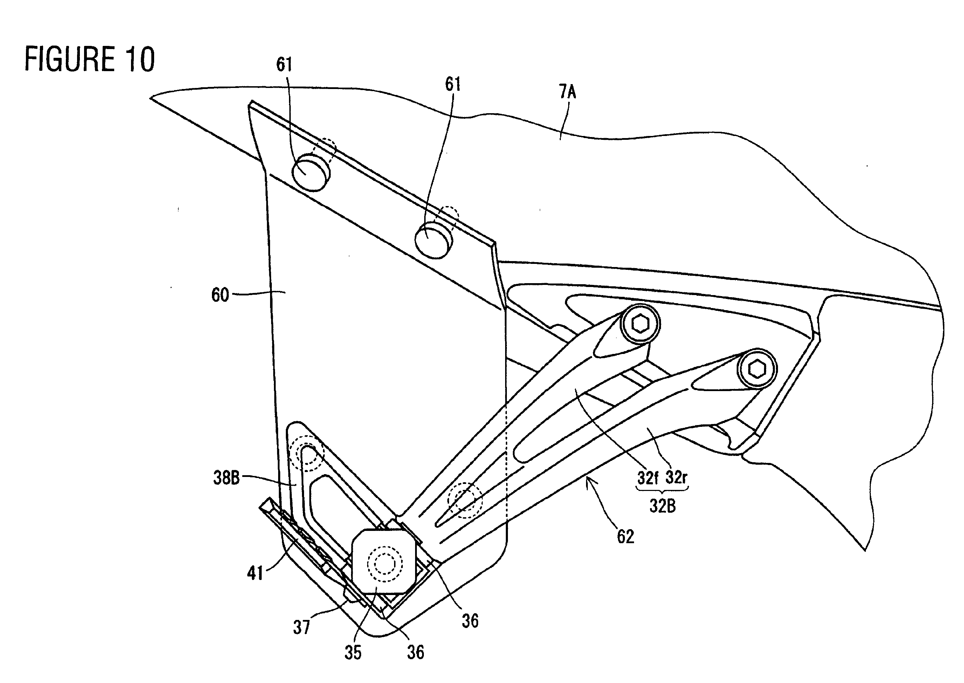

Now, embodiment 3 will be described with reference to FIG 10. In embodiments 1 and 2, each of the tandem footrests 27 and 50 includes the shielding member 40 and 52. In this embodiment, a tandem footrest 62 includes a sheet-like flap 60 formed of a non-metal material as a shielding member. The flap 60 is formed of a flexible rubber material, and attached to the side cover 7A as hanging from the bottom edge 7b of the side cover 7A. A top end portion of the flap 60 is attached to the side cover 7A by a screw 61, and a bottom end portion of the flap 60 is screwed to an inner surface of a leg section 32B and an inner surface of a projection section 38B of the tandem footrest 62. Thus, the entirety of the flap 60 is attached as being substantially stretched. As shown in FIG. 10, the bottom end portion of the flap 60 has a pointed center in accordance with the angle made by a longitudinal direction of the leg section 32B and a longitudinal direction of the projection section 38B.

As understood from above, in the tandem footrest 62 according to this embodiment, the flap 60 covers a space between the footrest section 35 and the bottom edge 7b of the side cover 7A in the up/down direction, and covers a space between a substantial center of the leg section 32B and a rear edge of the projection section 38B in the front/rear direction. Owing to the flap 60 provided in this manner, the tandem footrest 62 can block the heat.

### <Embodiment 4>

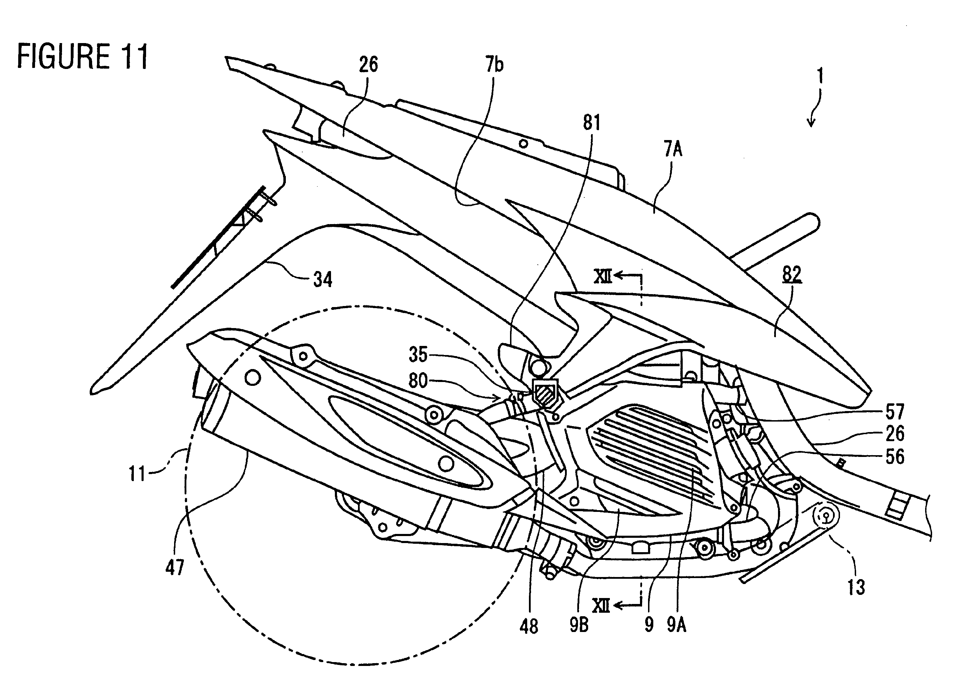

Now, embodiment 4 of the present invention will be described with reference to FIG. 11 through FIG. 16. In this embodiment, as described below, a leg section 32C and a base section 39C are partially covered with resin members (a heat-insulating cover 82, a shielding member 81).

As shown in FIG. 11, the side cover 7A is located to cover an outer portion of a part of the seat frame 26. The side cover 7A is located below the seat 8 (see FIG. 1). Although not shown in FIG. 11, the seat 8 is provided above the side cover 7A. The side cover 7A has the bottom edge 7b extending rearward and upward obliquely and distanced upward from the rear wheel 11 as seen in the side view.

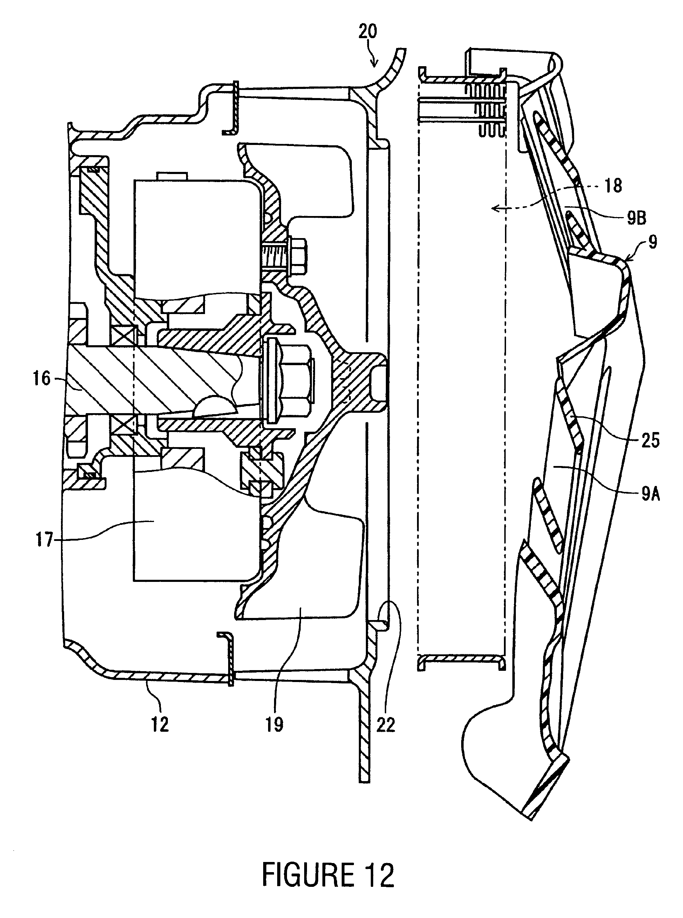

As shown in FIG. 12, the radiator 18 is located outside of the crank case 12 in a width direction of the motorcycle. In other words, the radiator 18 is located outside of the engine unit U (see FIG. 1) in a width direction of the motorcycle. As described above, the radiator 18 is covered with the radiator cover 9. Therefore, the radiator cover 18 overlaps the radiator cover 9 as seen in the side view (see FIG. 11). The radiator cover 9 is located below the bottom edge 7b of the side cover 7A. Namely, the radiator 18 is at least partially located below the bottom edge 7b of the side cover 7A.

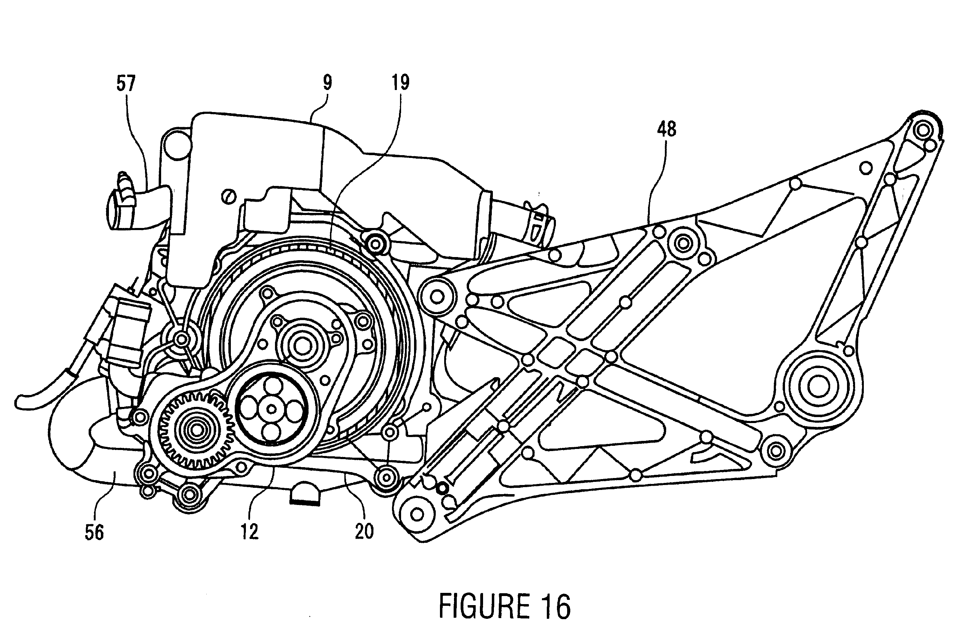

As shown in FIG. 12, the fan case 20 is located to the side of the radiator 18. The fan case 20 is located inward to the radiator 18 in a width direction of the motorcycle. Inside the fan case 20, the radiator fan 19 (see FIG. 16) is provided. The radiator fan 19 introduces air to the radiator 18 from outside to inside in a width direction of the motorcycle.

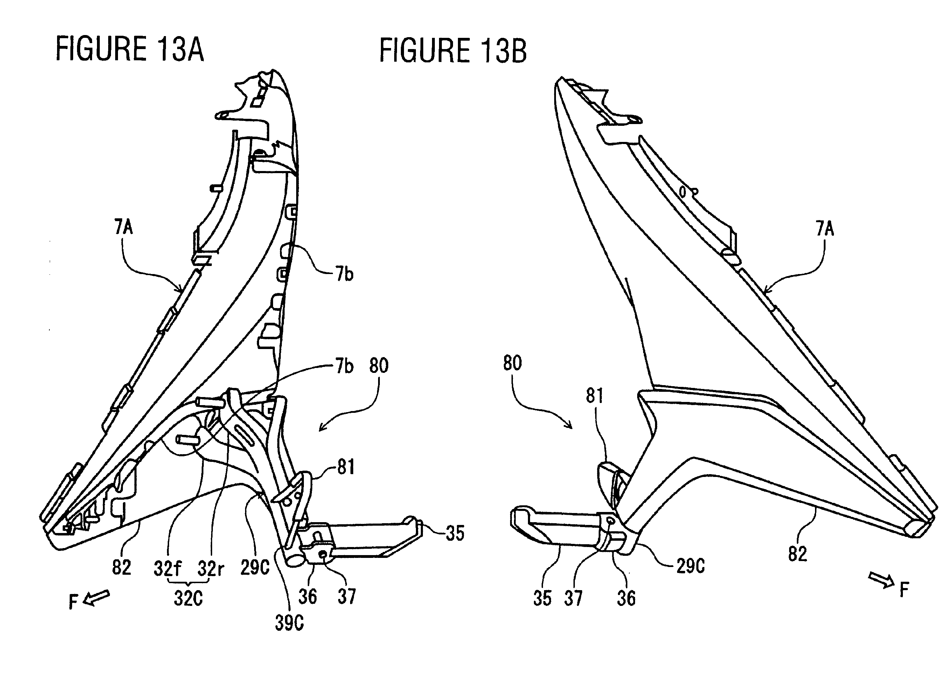

As shown in FIG. 11, the motorcycle 1 includes a tandem footrest 80. As shown in FIG. 13A, the tandem footrest 80 includes the leg section 32C fixed to the seat frame 26 of the body frame 6 (see FIG. 1) and the footrest section 35 supported by the leg section 32C. The leg section 32C is formed of a metal material. The footrest section 35 is located outside in a width direction of the motorcycle , and rearward in the front/rear direction to, the radiator 18. The footrest section 35 is located at a position deviated from the cooling air intake openings 9A and 9B of the radiator cover 9 as seen in the side view. The footrest section 35 is located below the bottom edge 7b of the side cover 7A as seen in the side view. In FIG. 13A and FIG. 13B, arrow F represents the forward direction of the motorcycle 1.

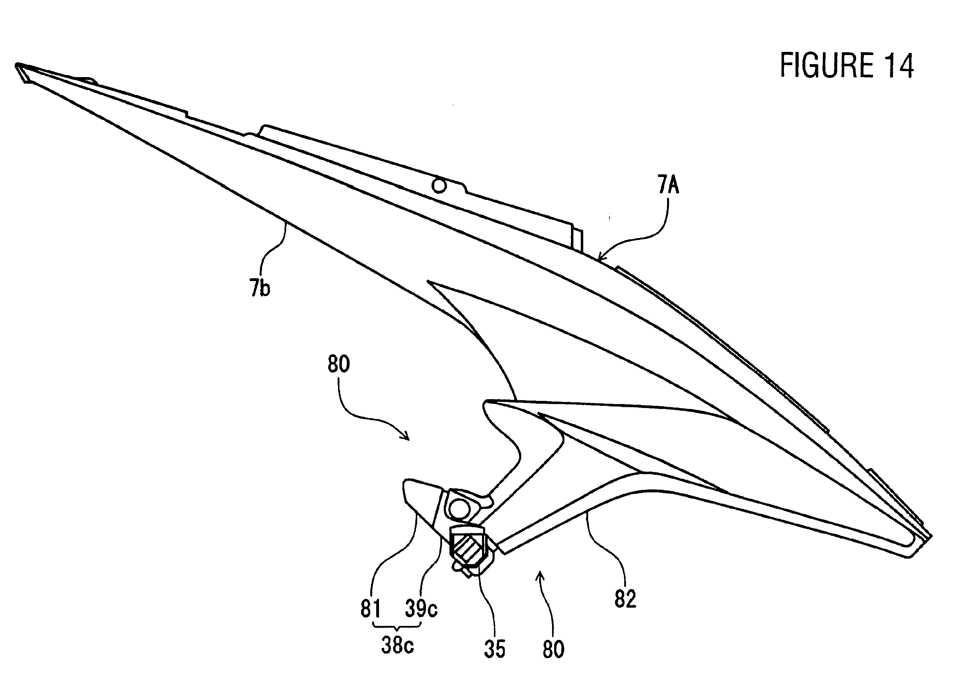

The motorcycle 1 includes a shielding member 81. The shielding member 81 is formed of a material having a lower thermal conductivity than the leg section 32C. As in each of the above embodiments, the shielding member 81 is formed of a non-metal material, specifically, a resin material. As shown in FIG. 14, at least a part of the shielding member 81 is located rearward to the footrest section 35 as seen in the side view.

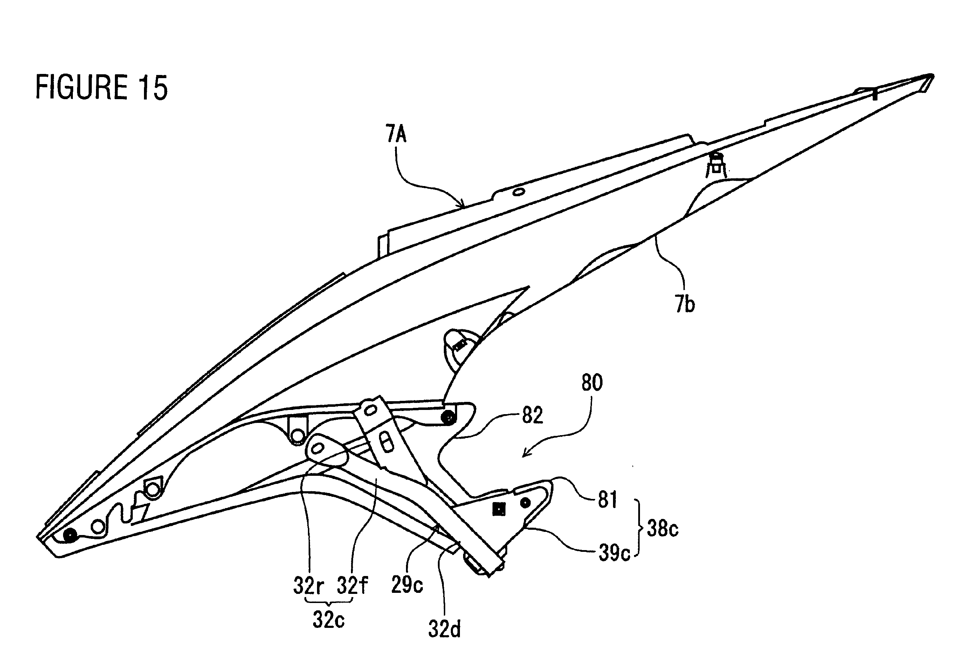

As shown in FIG. 14 or FIG. 15, the tandem footrest 80 includes the base section 39C extending rearward and upward from the footrest section 35 as seen in the side view. The base section 39C is fixed to a bottom portion of the leg section 32C. The shielding member 81 is shaped like a cap and is fit onto the base section 39C. Thus, the shielding member 81 in this embodiment is easy to be attached. A main body 29C of the tandem footrest 80 is formed of at least the base section 39C and the leg section 32C. A projection section 38C is formed of the base section 39C and the shielding member 81. The projection section 38C extends rearward and upward obliquely from the footrest section 35 as seen in the side view.

The motorcycle 1 in this embodiment includes a heat-insulating cover 82 separate from the shielding member 81. As shown in FIG. 14, the heat-insulating cover 82 is formed in a part of the side cover 7A. Namely, the heat-insulating cover 82 in this embodiment is a part of the side cover 7A. Like the shielding member 81, the heat-insulating cover 82 is formed of a material having a lower thermal conductivity than the leg section 32C. The heat-insulating cover 82 is formed of a non-metal material, specifically, a resin material. The heat-insulating cover 82 is located above the footrest section 35. The heat-insulating cover 82 is exposed outside the tandem footrest 80 in a width direction of the motorcycle.

As shown in FIG. 13A, the heat-insulating cover 82 is attached to the side cover 7A. As shown in FIG. 13B and the like, at least a top portion of the leg section 32C is covered with the heat-insulating cover 82 from outside in a width direction of the motorcycle. The heat-insulating cover 82 is not limited to being attached to the side cover 7A, and may be attached to a rear fender 34 (see FIG. 11) which covers the rear wheel 11. The heat-insulating cover 82 may be integral with the rear fender 34. In this embodiment, the heat-insulating cover 82 covers, from outside in a width direction of the motorcycle , a portion of the leg section 32C which is above the position at which the holding sections 36 are attached. Owing to this, regarding the leg section 32C formed of a metal material, at least a portion above the position at which the holding sections 36 are attached is not exposed outside the vehicle. As a result, the comfort felt by the tandem rider can be further improved.

The tandem footrest 80 is located outside of the radiator cover 9 in a width direction of the motorcycle , and is located above the radiator 18 in the up/down direction. The tandem footrest 80, which is located above the radiator 18, does not overlap the radiator 18 as seen in the side view. As shown in FIG. 11, the intake openings 9A and 9B of the radiator cover 9 do not overlap the footrest section 35 as seen in the side view. Therefore, the air flowing from the outside of the radiator cover 9 toward the radiator fan 19 (see FIG. 2 or FIG. 12) is not blocked by the footrest section 35. Namely, in the case where, as in this embodiment, the tandem footrest 80 is located above the radiator 18, the air to be introduced into the radiator 18 smoothly flows from the outside of the radiator 18 toward the radiator 18. In this embodiment, the heat-insulating cover 82 is located above the footrest section 35. Owing to this, the air increased in the temperature by the radiator 18 is likely to flow rearward along the heat-insulating cover 82 above the radiator 18. In this case, even though the main body 29C including the leg section 32C is heated by the air flowing along the heat-insulating cover 82, the heat is prevented by the shielding member 81 and the heat-insulating cover 82 from flowing to the foot of the tandem rider with certainty. Thus, the motorcycle according to this embodiment can smoothly introduce the air to the radiator 18 and ensure the comfort for the tandem rider.

As described above, the radiator 18 is located outside of the engine unit U in a width direction of the motorcycle. The radiator 18, which is in the form of the so-called side radiator, swings together with the engine unit U. Therefore, there is no need to consider the difference in the amount of swing between the radiator 18 and the engine unit U. Since this makes it unnecessary to absorb the swing by a radiator hose 56, a radiator hose 57 or the like, the radiator hose 56 and the radiator hose 57 can be located relatively freely (see FIG. 11 or FIG. 17).

In this embodiment also, even though the leg section 32C is heated by the radiator 18, the foot of the tandem rider does not directly contact the leg section 32C. Therefore, the comfort for the tandem rider is ensured. Namely, in this embodiment also, the foot of the tandem rider is shielded against the heat. Since the main body 29C is covered with the heat-insulating cover 82, the comfort felt by the tandem rider can be further improved.

### <Other embodiments>

The present invention is not limited to the embodiments described above, and encompasses, for example, the following embodiments. The present invention may be carried out in various other modifications.
(1) The shielding member is not limited to being formed of a synthetic resin, and may be formed of rubber.
(2) The shielding member is not limited to being fixed to the main body by a bolt, and may be detachably attached. Alternatively, the shielding member may be fixed to the main body by an adhesive or the like.
(3) In each of the above embodiments, the engine unit U includes the rear arm 48 in a right portion of the vehicle (the front portion of the rear arm 48 is coupled to a right rear end portion of the crank case 12, and the rear portion of the rear arm 48 supports the rear wheel 11). The motorcycle 1 does not need to include the rear arm 48. In this case, the rear wheel 11 is supported by, for example, only a rear portion of the engine unit U.
(4) In each of the above embodiments, a pair of left and right rear shock absorbers 14 are provided on both sides of the vehicle. Only one rear shock absorber 14 may be provided on one side of the vehicle. In this case, the rear shock absorber 14 may be located in the vicinity of the pivot shaft 13.
(5) In each of the above embodiments, the footrest section 35 is rod-shaped as shown in FIG. 13 and the like. The footrest section 35 is not limited to being rod-shaped, and may have any shape as long as being pivotable between the use position and the storage position and capable of supporting the leg of the tandem rider.
(6) In each of the above embodiments, the tandem footrest provided on the right side of the motorcycle 1 is described. The tandem footrest described in each of the above embodiments may be provided on the left side of the motorcycle 1. The motorcycle 1 may include a shielding member, a heat-insulating cover or the like only on the side where the radiator 18 is provided in the left/right direction.
(7) In embodiment 4, the motorcycle 1 includes the shielding member 81 and the heat-insulating cover 82 (see FIG. 14). The motorcycle 1 in embodiment 4 may include only the shielding member 81.
(8) In each of the above embodiments, the leg sections 32, 32A, 32B and 32C each include a front leg section 32f and a rear leg section 32r branched from each other. The front leg section 32f and the rear leg section 32r become gradually closer to each other as approaching a rear end of the leg section 32, and are connected to the bottom leg section 32d. Alternatively, each of the leg sections 32, 32A, 32B and 32C may be formed of one element without including the branched sections. Even where each of the leg sections 32, 32A, 32B and 32C includes the front leg section 32f and the rear leg section 32r branched from each other, the front leg section 32f and the rear leg section 32r may be kept branched from a top end to a bottom end thereof without being connected to the bottom leg section 32d.

### DESCRIPTION OF THE REFERENCE NUMERALS

- 6: Body frame
- 7: Body cover
- 7A: Side cover (body cover)
- 7b: Bottom edge
- 8: Seat
- 11: Rear wheel
- 18: Radiator
- 19: Radiator fan
- 26: Seat frame (body frame)
- 27: Tandem footrest
- 32: Leg section
- 33: Heat-insulating cover (another shielding member)
- 35: Footrest section
- 38: Projection section
- 39: Base section (extending section)
- 40: Shielding member
- 49: Heat releasing fin
- 50: Tandem footrest
- 51: Cover (another shielding member)
- 52: Cover (shielding member)
- 60: Flap (shielding member)
- 62: Tandem footrest
- 80: Tandem footrest
- 81: Shielding member
- 82: Heat-insulating cover (another shielding member)
- EG: Engine
- U: Engine unit

## Claims

1. A motorcycle, comprising:
a body frame (6) extending in a front/rear direction;
a seat (8) supported by a rear portion of the body frame (6);
an engine unit (U) including an engine (EG), the engine unit (U) being located below the seat (8) and swingably supported by the body frame (6);
a rear wheel (11) located rearward to the engine (EG) and swingable with respect to the body frame (6) together with the engine unit (U);
a body cover (7) having a bottom edge (7b) which extends rearward and upward obliquely and is spaced-apart in the upward direction from the rear wheel (11) as seen in a side view, the body cover (7) being located below the seat (8) so as to cover an outer portion of a part of the body frame (6);
a radiator (18) located outside of the engine unit (U) in a width direction of the motorcycle and having at least a part thereof located below the body cover (7) as seen in the side view;
a radiator fan (19), located to a side of the radiator (18), for introducing air to the radiator (18) from outside to inside in a width direction of the motorcycle;
**characterized by**
a tandem footrest (80) including a leg section (32C) fixed to the body frame (6) and a footrest section (35) supported by the leg section (32C), and located outside of the radiator (18) in a width direction of the motorcycle, rearward to a front edge of the radiator (18) in the front/rear direction and below the bottom edge (7b) of the body cover (7) as seen in the side view, wherein the footrest section (35) is adapted to support a leg of a tandem rider; and
a shielding member (81) formed of material having a lower thermal conductivity than the leg section (32C) and at least partially located rearward to the footrest section (35) as seen in the side view,
wherein the tandem footrest (80) includes an extending section extending rearward and upward obliquely from the footrest section (35) as seen in the side view; and
wherein the shielding member (81) is a cap-like member fit onto the extending section.

2. A motorcycle according to claim 1, further comprising another shielding member (82) formed of a material having a lower thermal conductivity than the leg section (32C) and located outside of the leg section (32C) in a width direction of the motorcycle, the leg section (32C) being located above the footrest section (35).

3. A motorcycle according to claim 1, wherein the tandem footrest (80) is located above the radiator (18).

4. A motorcycle according to claim 1, further comprising a fan case (20) located outside of the radiator fan (19) in a width direction of the motorcycle and having an introduction opening for introducing air, wherein the tandem footrest (80) is located at a position deviated from the introduction opening of the fan case (20) as seen in the side view.

5. A motorcycle according to claim 1, wherein:
the leg section (32C) is formed of a metal material; and
the shielding member (81) is formed of a non-metal material.

6. A motorcycle according to claim 1, wherein:
the leg section (32C) is formed of a metal material; and
the shielding member (81) is formed of a resin material.

## Patentansprüche

1. Ein Motorrad, das folgende Merkmale aufweist:
einen Karosserierahmen (6), der sich in einer Vorwärts/Rückwärts-Richtung erstreckt;
einen Sitz (8), der durch einen hinteren Abschnitt des Karosserierahmens (6) getragen wird;
eine Motoreinheit (U), die einen Motor (EG) umfasst, wobei sich die Motoreinheit (U) unter dem Sitz (8) befindet und schwenkbar durch den Karosserierahmen (6) getragen wird;
ein Hinterrad (11), das sich weiter hinten als der Motor (EG) befindet und bezüglich des Karosserierahmens (6) zusammen mit der Motoreinheit (U) schwenkbar ist;
eine Karosserieabdeckung (7), die eine Unterkante (7b) aufweist, die sich nach hinten und schräg nach oben erstreckt und in einer Seitenansicht in der Aufwärtsrichtung von dem Hinterrad (11) beabstandet ist, wobei sich die Karosserieabdeckung (7) unter dem Sitz (8) befindet, um einen äußeren Abschnitt eines Teils des Karosserierahmens (6) abzudecken;
einen Kühler (18), der sich in einer Breitenrichtung des Motorrads außerhalb der Motoreinheit (U) befindet, und wobei zumindest ein Teil desselben in der Seitenansicht unter der Karosserieabdeckung (7) befindlich ist;
einen Kühlerlüfter (19), der sich auf einer Seite des Kühlers (18) befindet, um in einer Breitenrichtung des Motorrads von außen nach innen dem Kühler (18) Luft zuzuführen;
**gekennzeichnet durch**
eine Tandem-Fußraste (80), die einen an dem Karosserierahmen (6) befestigten Beinabschnitt (32C) und einen **durch** den Beinabschnitt (32C) getragenen Fußrastenabschnitt (35) umfasst und sich in der Seitenansicht in einer Breitenrichtung des Motorrads außerhalb des Kühlers (18), in der Vorwärts/Rückwärts-Richtung weiter hinten als eine Vorderkante des Kühlers (18) und unter der Unterkante (7b) der Karosserieabdeckung (7) befindet, wobei der Fußrastenabschnitt (35) dazu angepasst ist, ein Bein eines Tandemfahrers zu tragen; und
ein Schutzelement (81), das aus einem Material gebildet ist, das eine geringere Wärmeleitfähigkeit aufweist als der Beinabschnitt (32C) und das sich in der Seitenansicht zumindest teilweise weiter hinten befindet als der Fußrastenabschnitt (35),
wobei die Tandem-Fußraste (80) einen Erstreckungsabschnitt umfasst, der sich in der Seitenansicht von dem Fußrastenabschnitt (35) aus nach hinten und schräg nach oben erstreckt; und
wobei das Schutzelement (81) ein kappenartiges Bauglied ist, das auf den Erstreckungsabschnitt aufgesetzt ist.

2. Ein Motorrad gemäß Anspruch 1, das ferner ein weiteres Schutzelement (82) aufweist, das aus einem Material gebildet ist, das eine geringere Wärmeleitfähigkeit aufweist als der Beinabschnitt (32C) und sich in einer Breitenrichtung des Motorrads außerhalb des Beinabschnitts (32C) befindet, wobei sich der Beinabschnitt (32C) über dem Fußrastenabschnitt (35) befindet.

3. Ein Motorrad gemäß Anspruch 1, bei dem sich die Tandem-Fußraste (80) über dem Kühler (18) befindet.

4. Ein Motorrad gemäß Anspruch 1, das ferner ein Lüftergehäuse (20) aufweist, das sich in einer Breitenrichtung des Motorrads außerhalb der Kühlerlüftung (19) befindet und eine Zuführöffnung zum Zuführen von Luft aufweist, wobei sich die Tandem-Fußraste (80) in einer Position befindet, die in der Seitenansicht von der Zufuhröffnung des Lüftergehäuses (20) abweicht.

5. Ein Motorrad gemäß Anspruch 1, bei dem:
der Beinabschnitt (35C) aus einem Metallmaterial gebildet ist; und
das Schutzelement (81) aus einem nicht-metallischen Material gebildet ist.

6. Ein Motorrad gemäß Anspruch 1, bei dem:
der Beinabschnitt (32C) aus einem metallischen Material gebildet ist; und
das Schutzelement (81) aus einem Harzmaterial gebildet ist.

## Revendications

1. Motocyclette, comprenant:
un châssis de carrosserie (6) s'étendant dans une direction avant/arrière;
un siège (8) supporté par une partie arrière du châssis de carrosserie (6);
une unité de moteur (U) comportant un moteur (EG), l'unité de moteur (U) étant située au-dessous du siège (8) et supportée de manière pivotante par le châssis de carrosserie (6);
une roue arrière (11) située à l'arrière du moteur (EG) et pouvant être pivotée par rapport au châssis de carrosserie (6) ensemble avec l'unité de moteur (U);
un couvercle de châssis (7) présentant un bord inférieur (7b) qui s'étend vers l'arrière et de manière oblique vers le haut et qui est espacé de la roue arrière (11) dans la direction vers le haut, vu en vue de côté, le couvercle de châssis (7) étant situé au-dessous du siège (8) de manière à recouvrir une portion extérieure d'une partie du châssis de carrosserie (6);
un radiateur (18) situé à l'extérieur de l'unité de moteur (U) dans une direction de la largeur de la motocyclette et présentant au moins une partie de celui-ci située au-dessous du couvercle du châssis (7), vu en vue de côté;
un ventilateur de radiateur (19) situé d'un côté du radiateur (18), destiné à introduire de l'air dans le radiateur (18), de l'extérieur vers l'intérieur, dans une direction de la largeur de la motocyclette;
**caractérisée par**
un repose-pied en tandem (80) comportant un segment de jambe (32C) fixé au châssis de carrosserie (6) et un segment de repose-pied (35) supporté par le segment de jambe (32C), et situé à l'extérieur du radiateur (18) dans une direction de la largeur de la motocyclette, à l'arrière d'un bord avant du radiateur (18) dans la direction avant/arrière et au-dessous du bord inférieur (7b) du couvercle de châssis (7), vu en vue de côté, où le segment de repose-pied (35) est adapté pour supporter une jambe d'un conducteur en tandem; et
un élément de protection (81) formé en un matériau présentant une conductivité thermique inférieure à celle du segment de jambe (32C) et situé au moins partiellement à l'arrière du segment de repose-pied (35), vu en vue de côté,
dans laquelle le repose-pied en tandem (80) comporte un segment de prolongement s'étendant vers l'arrière et obliquement vers le haut à partir du segment de repose-pied (35), vu en vue de côté; et
dans laquelle l'élément de protection (81) est un élément de type capot monté sur le segment de prolongement.

2. Motocyclette selon la revendication 1, comprenant par ailleurs un autre élément de protection (82) formé en un matériau présentant une conductivité thermique inférieure à celle du segment de jambe (32C) et situé à l'extérieur du segment de jambe (32C) dans une direction de la largeur de la motocyclette, le segment de jambe (32C) étant situé au-dessus du segment de repose-pied (35).

3. Motocyclette selon la revendication 1, dans laquelle le repose-pied en tandem (80) est situé au-dessus du radiateur (18).

4. Motocyclette selon la revendication 1, comprenant par ailleurs un carter de ventilateur (20) situé à l'extérieur du ventilateur de radiateur (19) dans une direction de la largeur de la motocyclette et présentant une ouverture d'introduction destinée à introduire de l'air, où le repose-pied en tandem (80) est situé en une position écartée de l'ouverture d'introduction du carter de ventilateur (20), vu en vue de côté.

5. Motocyclette selon la revendication 1, dans laquelle:
le segment de jambe (32C) est formé en un matériau métallique; et
l'élément de protection (81) est formé en un matériau non métallique.

6. Motocyclette selon la revendication 1, dans laquelle:
le segment de jambe (32C) est formé en un matériau métallique; et
l'élément de protection (81) est formé en un matériau à base de résine.
